# EUROPEAN PATENT SPECIFICATION

(11) **EP 1 968 313 B1**
(45) Date of publication and mention of the grant of the patent: **07.04.2010**
(21) Application number: 07250827.8
(22) Date of filing: 28.02.2007
(51) Int. Cl.: H04N 5/445

(54) **Electronic program guide generation**
Elektronische Programmführererstellung
Génération de guide de programme électronique

(43) Date of publication of application: 10.09.2008
(73) Proprietor: SONY UNITED KINGDOM LIMITED, Weybridge KT13 0XW (GB)
(72) Inventor: Edmunds, Timothy, Mid Glamorgan, South Wales CF31 1RP (GB)
(74) Representative: Merryweather, Colin Henry

(56) References cited:
- JP-A- 11 098 431
- KR-A- 20050 015 072
- US-A- 6 069 614
- US-A1- 2002 069 415
- US-A1- 2004 103 432
- US-A1- 2006 253 802
- US-B1- 6 865 746

## Description

The present invention relates generally to digital television and specifically to a receiver-decoder for receiving and decoding a broadcast digital television signal.

Digital television signals are broadcast in encoded form, for example in accordance with the MPEG-2 or MPEG-4 standard. Reception is performed by a receiver-decoder apparatus which includes a receiver-decoder circuit which receives the broadcast television signal and decodes it into a format in which allowing display by a display device. The receiver-decoder apparatus may be a television apparatus incorporating the display device or may be a separate apparatus, such as a set-top box, which supplies the decoded television signal to a television apparatus.

An Electronic Program Guide (EPG) is a guide displayed on the display device of the television apparatus to show a list of television programs (hereinafter called "events") which are available to watch on the various television channels (hereinafter called "services") over a given period of time. An EPG is an on-screen guide giving information about events on respective services that either are currently being broadcast or are due to be subsequently broadcast. The information typically includes the name of the service and the name and times of the events. It may include further information such as a brief synopsis of the event.

To allow generation of the EPG, signalling data representing the content of the EPG is broadcast together with the broadcast television signal. The signalling data may be time-multiplexed within the broadcast television signal as occurs in the DVB standard or may be transmitted on a separate channel as occurs in the ATSC standard. The receiver-decoder apparatus extracts the signalling data and uses it to generate an EPG.

There is a trend towards interactive television in which the user is able to interactively select television content to watch. Ultimately this might be provided by on-demand download of television content, but at present there are infrastructure and practical constraints which mean this is not generally available to consumers. Therefore other, simpler means of enhancing the choice of television for users is desirable.

US-6,865,746 discloses a receiver-decoder apparatus, comprising: a receiver-decoder circuit capable of receiving and decoding broadcast television signals of different services to generate therefrom a video signal for display of an image on a display device; and EPG generation means for extracting signalling data broadcast with the broadcast television signal and received by the receiver-decoder circuit to generate therefrom a signal for display on said display device, of an electronic program guide showing a list of the services available for reception by the receiver-decoder circuit and events in respect of those services. The EPG generation means is arranged to identify within the services available for reception by the receiver-decoder circuit, further events which are related to respective events in the electronic program guide. The apparatus is arranged to display a list of events related to an event in the EPG in response to the user first selecting one of the events in the EPG and then selecting the option of displaying related events.

US-2002/0069415 discloses a receiver-decoder apparatus, comprising: a receiver-decoder circuit capable of receiving and decoding broadcast television signals of different services to generate therefrom a video signal for display of an image on a display device; and EPG generation means for extracting signalling data broadcast with the broadcast television signal and received by the receiver-decoder circuit to generate therefrom a signal for display on said display device, of an electronic program guide showing a list of the services available for reception by the receiver-decoder circuit and events in respect of those services. The EPG generation means is arranged to identify within the services available for reception by the receiver-decoder circuit, further events which are related to respective events in the electronic program guide. The apparatus is arranged to display, in a submenu that may be selected from a menu of available events itself selectable by the user, a listing of further events related to an event highlighted in the menu.

According to a first aspect of the present invention, there is provided a receiver-decoder apparatus, comprising:
a receiver-decoder circuit capable of receiving and decoding broadcast television signals of different services to generate therefrom a video signal for display of an image on a display device; and

EPG generation means for extracting signalling data broadcast with the broadcast television signal and received by the receiver-decoder circuit to generate therefrom a signal for display on said display device, of an electronic program guide showing a list of the services available for reception by the receiver-decoder circuit and events in respect of those services,
wherein the EPG generation means is arranged to identify, within the services available for reception by the receiver-decoder circuit, further events which are related to a plurality of respective events in the electronic program guide, and
**characterised in that** the EPG generation means is arranged to generate the signal for display of the electronic program guide showing the further events together with the list of services available for reception by the receiver-decoder circuit and the events in respect of those services, said further events being shown associated with said plurality of respective events to which they are related.

According to a second aspect of the present invention, there is provided a corresponding method.

As a result it is possible for the EPG to indicate further events which are related to respective events within the services. This allows the user to be presented with a choice of related events. This increases the choice of television content for the user because the user can immediately appreciate the existence of the further events. Of course the further events could have been broadcast in other services even without implementing the present invention, but in that case there would have been a risk of the user failing to notice the further events due to the large number of services typically available.

To allow better understanding, an embodiment of the present invention will now be described by way of non-limitative example with reference to the accompanying drawings, in which:
Fig. 1 is a diagram of a receiver-decoder apparatus;
Fig. 2 shows a traditional electronic program guide;
Fig. 3 shows an electronic programme guide in accordance with the present invention; and
Figs. 4 to 6 show alternative arrangements of the blocks in an electronic program guide.

By way of example a description will be given of an embodiment working with broadcast television signals in accordance with the DVB standard. First the nature of the broadcast television signals will be described.

According to the DVB standard, what a user might normally call a "channel" is known as a "service". For example, in the UK, BBC1 would be one service and BBC2 would be another service. Also according to the DVB standard, what a user might normally call a "program" is known as an "event". These occupy individual time slots within a service. For example, in the UK, an episode of "Newsnight" would represent one event and an episode of "University Challenge" would represent another event. Each service is therefore a concatenation of television events.

According to the DVB standard, the broadcast television signal comprises a stream of packets of data multiplexed together and carried modulated onto a radio frequency (RF) carrier signal in a single RF channel. The stream is sometimes referred to as a channel because it corresponds to a transmission channel. The stream contains packets of video signal data, packets of audio signal data and packets of signalling data. Each packet of signalling data is associated with a particular table, the arrangement and content of which is in accordance with those defined in the standards ISO/IEC 13818-1 and EN 300 468.

As defined in the standards, each of the signalling data packets has a packet identifier (PID) which designates it as a packet of signalling data, rather than a packet of audio or visual data. Also in each signalling data packet is a table identifier, which designates which table the packet belongs to. Each signalling data packet also contains a "payload", which contains data about, for example, the network, the services and/or the events. The precise items of data that are stored in a packet depend on which table the packet belongs to, and details of which items of data are given in packets belonging to a particular table can be found in the standards. For present purposes it is noted that the signalling data includes the following information which can be extracted for use as the content of an EPG:
a Service Description Table (SDT) which gives information on services which are being transmitted, including the names of the services; and
an Event Information Table (EIT) which gives information on the events in respect of each service, including the names and times of the respective events.

In this example, the broadcast television signals are encoded in accordance with the MPEG-2 standard. In this case, each broadcast RF channel comprises a plurality of services multiplexed together. Of course the encoding may be of any other type, for example in accordance with the MPEG-4 standard.

Although an embodiment using the DVB standard is described herein, the embodiment could equally be applied to alternative standards, such as the ARIB standard (for example, in Japan), or the ATSC standard (for example, in the United States). Such alternative standards transmit equivalent information which can be extracted and utilised in an equivalent manner to that described below.

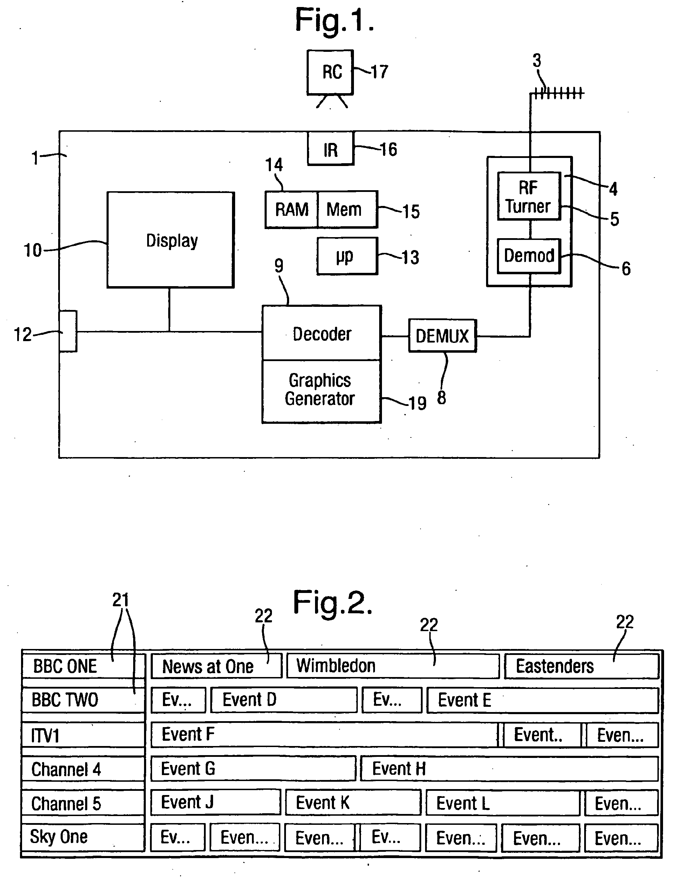

Fig. 1 shows a receiver-decoder apparatus 1 which is capable of receiving and decoding broadcast television signals in accordance with the DVB standard and the MPEG-2 standard. In this case the receiver-decoder apparatus 1 is a television including a display device 10 but this is not essential. For example the receiver-decoder apparatus 1 could have no display device and instead output a video stream for supply to a separate television apparatus. In this case, the receiver-decoder apparatus 1 might be a set-top box or a recoding apparatus including a recording device for recording a video signal.

The receiver-decoder apparatus 1 is connected to an external antenna 3 in a conventional manner. The receiver-decoder apparatus 1 has a receiver circuit 4 which is supplied with a radio frequency television broadcast signal received by the antenna 3.

The receiver circuit 4 comprises an RF tuner 5 which extracts the desired broadcast signal and a demodulator 6 which demodulates the broadcast signal to extract a multiplexed signal of a single broadcast channel.

In this example, the broadcast digital television signal is a terrestrial signal transmitted on a RF carrier. As an alternative the broadcast digital television signal could be a satellite signal or a cable signal, in which case the antenna 3 and receiver circuit 4 are adapted in a conventional manner to receive such signals.

As is conventional for broadcast digital television, each broadcast channel carries a multiplexed signal in which a plurality of video streams and associated audio and data streams, commonly referred to as services, are multiplexed together. The video stream extracted by the demodulator 6 is supplied to a demultiplexer 8. The demultiplexer 8 demultiplexes the packets of data in the video stream to extract one or more video signals, one or more audio signals and signalling data.

The video signal extracted by the demultiplexer 8 is supplied to an MPEG-2 decoder 9 for decoding the video stream in accordance with the MPEG-2 standard. The MPEG-2 decoder 9 outputs an uncompressed video signal. Thus the receiver circuit 4, demultiplexer 8 and decoder 9 together form a receiver-decoder circuit for receiving and decoding the broadcast television signal. The video signal from the MPEG-2 decoder 9 is a supplied to the display device 10 which displays the video images of the video stream, or in the case that the display device 10 is absent is output from the receiver-decoder apparatus 1 through a video output interface 12 for supply to a separate television apparatus. If the receiver-decoder apparatus 1 has a recording device, the video signal may be supplied thereto to be recorded.

The receiver-decoder apparatus 1 includes a controller 13 which controls the operation of the components of the receiver-decoder apparatus 1. For example, the controller 13 controls the receiver circuit 4 and the demultiplexer 8 to select the broadcast video signal of a desired service.

The controller 13 is implemented by a microprocessor running an appropriate program. The controller 13 has associated therewith a RAM 14 and a non-volatile memory 15 such as a flash memory. The computer program may be stored in the non-volatile memory 15. The computer program may be pre-installed or may be transmitted to the recording apparatus 1 as a broadcast signal, this being a known technique for upgrading of software of a television receiving equipment.

The receiver-decoder apparatus 1 also includes an IR (infra-red) receiver unit 16 capable of receiving signals from a remote commander 17. The remote commander 17 is operated by a user to provide user-inputs to the receiver-decoder apparatus 1. The user-inputs may be supplied to and interpreted by the controller 13.

Generation and use of an EPG (electronic program guide) is implemented by the controller 13 as will now be described.

The content of the EPG in respect of the broadcast television signals which may be received by the receiver circuit 4 is derived from the signalling data received by the receiver circuit 4 of the receiver-decoder apparatus 1 and output by the demultiplexer 8. The controller 13 extracts this signalling data from the signalling data packets output by the demultiplexer 8 and uses it to populate the EPG. Thus the EPG includes a list of services available for reception by the receiver circuit 4 and events in respect of those services. Such content is conventional for an EPG in a receiver-decoder apparatus.

The controller 13 stores data representing the EPG in the memory 14.

The decoder 9 includes a graphics generator 19. In response to a user-input from the remote commander 17 selecting the EPG, the controller 13 controls the graphics generator 19 to generate the video signal representing the EPG stored in the memory 14. The EPG may be superimposed on or mixed with the video signal output by the decoder 9, so that they are displayed on the display device 10. Alternatively, the video signal may be output from the decoder 9 separately from the output video signal for display on the display device 10. Thus the user can view the EPG on the display device 10.

The form of the displayed EPG will now be described.

A traditional EPG is shown in Fig. 2. The EPG is displayed in grid showing a list of services. The EPG includes a column of service fields each represented by a block 21 bearing the name of the service. In respect of each service, the EPG includes a row of event fields each represented by a block 22 bearing information about the events including the names and times of the events. The blocks 22 of the individual event fields are arranged along a common time line such that the length of the blocks 22 is indicative of the length of the corresponding event. In general, the format of the EPG may be freely designed by the manufacturer of the receiver-decoder apparatus 1 to provide a desired look and feel.

The EPG of the receiver-decoder apparatus 1 is a modified form of the traditional EPG shown in Fig. 2 as will now be described.

As well as the content described above, the controller 13 identifies further events within the services available for reception by the receiver circuit 4. These further events each relate to a respective event in the EPG. The further events may be related to the normal events in the EPG in any manner chosen by the broadcaster. Typically the further events have content related to the normal events. Some examples are as follows. The further events may be alternative views of the same content, for example recordings of the same sports event with a different camera angle. The further events may be alternative content which is expected to interest the viewer. For example if the normal event is a match in a sports tournament, the further events may be different matches in the same sports tournament, or the further events may contain different or additional content related to the normal event. Another possibility is that the further events are abbreviated highlights of the normal event to which they relate. However, these examples are by no means limitative. Indeed a particular advantage of the present invention is that the further events may be related to the normal events in the EPG in any manner whatsoever.

The controller 13 derives data about the further events and stores it in the memory 14 as part of the data of the electronic program guide. The data about the further events may be derived in various manners.

One option is that the data about the further events is extracted as part of the signalling data in the signalling data packets. In this case the signalling data includes an additional table beyond the tables normally included as part of the DVB standard.

Another option is that the data about the further events is extracted from data transmitted for the purpose of implementing a teletext service, for example data in accordance with the MHEG standard which is a standard for the middleware of interactive digital teletext services in the United Kingdom, or in accordance with the MHP standard which is a similar standard for interactive television used in other European countries.

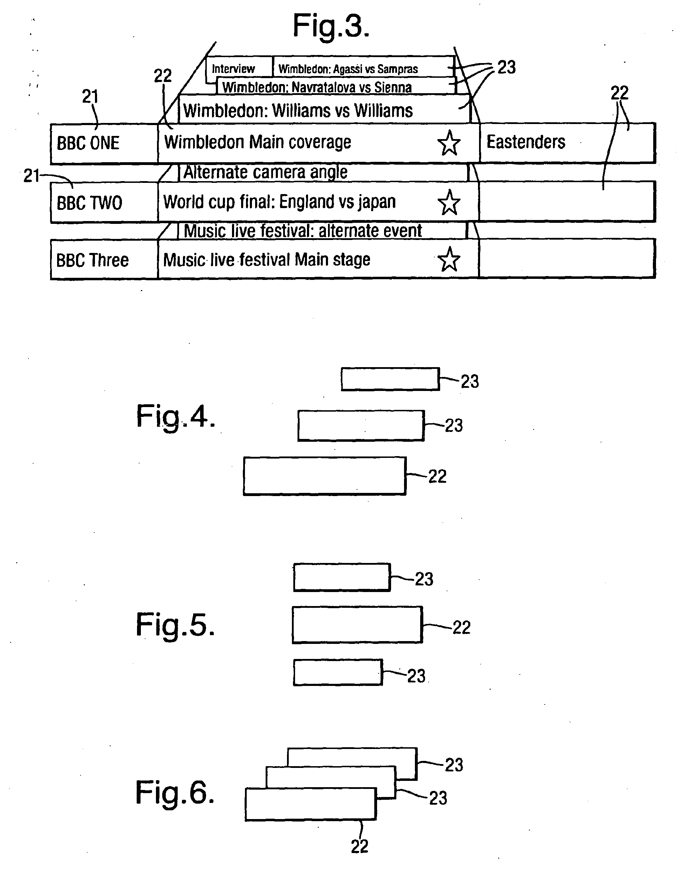

The further events are shown in the EPG displayed on the display device 10 by modifying the form of the displayed EPG to be as shown in Fig. 3. The displayed EPG has the same basic structure as the traditional EPG shown in Fig. 2 and as described above, in particular including a column of service fields each represented by a block 21 and, in respect of each service, a row of event fields represented by blocks 22. In addition, the further events are shown by further blocks 23 positioned adjacent the blocks of the events to which they are related. The further blocks 23 bear information about the further events including the names and times of the further events. The further blocks 23 are arranged relative to the block 22 of the event to which the further events relate to create the appearance of the further blocks 23 being more distant than the blocks 22 of the events to which they are related. Such a view gives the impression of depth. This is of great advantage because the user can immediately appreciate the relationship between the normal events in the services and the related, further events.

The appearance of the further blocks 23 being more distant than the blocks 22 may be created by a number of techniques. In Fig. 3, this impression is created by the use of a perspective view and by the further blocks 23 being overlapped by the blocks 22. Alternative arrangements for the blocks 22 and the further blocks 23 using a perspective view without overlapping are shown in Figs. 4 and 5. Another alternative arrangement for the blocks 22 and the further blocks 23 using overlapping without a perspective view is shown in Fig. 6.

Perspective is how the appearance of things relative to one another changes in accordance with their distance from the viewer. The further blocks 23 may be scaled (which means they are changed in size by the same proportion in both dimensions, in this case reduced in size) relative to the blocks 22, to create a perspective view of the further blocks 23 being of the same size as the blocks 22 but arranged more distantly than the blocks 22. Use of such a perspective view creates the appearance to the viewer that the further blocks 23 are actually arranged more distantly than the blocks 22, even though the blocks 22 and further blocks 23 are in fact a two-dimensional image. This effect is employed in each of the arrangements of Figs. 3 to 5.

The impression of depth may also be created by the further blocks 23 being overlapped by the blocks 22. This creates the impression to the viewer that the further blocks 23 are actually disposed behind the blocks 22, even though the blocks 22 and further blocks 23 are in fact a two-dimensional image. This effect may be employed together with a perspective view as shown in Fig. 3, but may also be employed by itself with the blocks 22 and further blocks 23 being of the same size as shown in Fig. 6.

The format of the displayed EPG is controlled by the controller 13 in response to user-inputs from the remote commander 17 to provide a graphical user interface (GUI). In particular a curser on the displayed EPG may be moved in response to user-inputs to high-light different services and/or events in the EPG including the normal events and the further events.

The controller 13 is also responsive to user-inputs from the remote commander 17 which select services and/or events in the EPG. In this case, the controller 13 controls the receiver-decoder apparatus 1 to receive the selected events, either now if it is a current event or at a point in the future if it is a future event, for example by setting a timer. The selected event which is received may be displayed on the display device 10 or output by the video output interface 12. Similarly the controller 13 may control the receiver-decoder apparatus 1 to cause recording of the selected events, for example by controlling the operation of a recording unit if present in the receiver-decoder apparatus 1 or by outputting a command to an external recording apparatus.

When the user selects a service in the list of services available for reception by the receiver circuit 4 or an event thereof, the controller 13 controls the receiver circuit 4 to receive the selected service and switches the switch 12 to the supply the video stream from the receiver circuit 4 to the demultiplexer 8 and decoder 9. Thus the video signal of the selected service is displayed on the display device 10. Where a future event is selected, this operation may be performed subsequently at the time of the event.

Although the receiver-decoder apparatus 1 is arranged to receive a radio frequency television broadcast signal, it may be modified to receive any type of broadcast television signal.

One alternative is a television signal delivered over a cable, commonly referred to as cable-TV. In this case the receiver-decoder apparatus 1 has basically the same structure as shown in Fig. 1 except that the connection to the external antenna 3 is replaced by a connection to the cable.

Another alternative is a television signal delivered over a network which may be a wired network such as the internet or a LAN or may be a wireless network. For example in the case of delivery over the internet, the television signals may be IPTV (Interenet Protocol television). In this case the receiver-decoder apparatus 1 has basically the same structure as shown in Fig. 1 except that the receiver circuit 4 is replaced by a network interface arranged to receive data from the data network and to extract a video stream therefrom.

## Claims

1. A receiver-decoder apparatus (1), comprising:
a receiver-decoder circuit (49) capable of receiving and decoding broadcast television signals of different services to generate therefrom a video signal for display of an image on a display device (10); and
EPG generation means (13, 19) for extracting signalling data broadcast with the broadcast television signal and received by the receiver-decoder circuit (4, 9) to generate therefrom a signal for display on said display device (10), of an electronic program guide showing a list of the services available for reception by the receiver-decoder circuit (49) and events in respect of those services,
wherein the EPG generation means (13, 19) is arranged to identify, within the services available for reception by the receiver-decoder circuit (4, 9), further events which are related to a plurality of respective events in the electronic program guide, and
**characterised in that** the EPG generation means (13, 19) is arranged to generate the signal for display of the electronic program guide showing the further events together with the list of services available for reception by the receiver-decoder circuit (4, 9) and the events in respect of those services, said further events being shown associated with said plurality of respective events to which they are related.

2. A receiver-decoder apparatus (1) according to claim 1, wherein in the electronic program guide the events in respect of each service are shown by blocks (22), and the further events are shown by blocks (23) positioned adjacent the blocks (22) of the events to which they are related but arranged to create the appearance of the blocks (23) of the further events being more distant than the blocks (22) of the events to which they are related.

3. A receiver-decoder apparatus (1) according to claim 2, wherein the blocks (23) of the further events are scaled relative to the blocks (22) of the events to which they are related to create the appearance of a perspective view.

4. A receiver-decoder apparatus (1) according to claim 2 or 3, wherein the blocks (22) of the further events are overlapped by the blocks of the events to which they are related.

5. A receiver-decoder apparatus (1) according to any one of the preceding claims, further comprising control means (16) for receiving user-inputs based on the electronic program guide and for controlling the receiver-decoder apparatus (1) in response to those user inputs to select any of the events or further events for reception and/or for being recorded.

6. A receiver-decoder apparatus (1) according to any one of the preceding claims, wherein the EPG generation means (13, 19) is arranged to store the signal for display of an electronic program guide in a memory (14, 15) of the receiver-decoder apparatus (1).

7. A receiver-decoder apparatus (1) according to any one of the preceding claims, wherein the receiver-decoder apparatus (1) further comprises a display device (10) and the receiver-decoder circuit and the EPG generation means are arranged to supply said signals to the display device (10).

8. A receiver-decoder apparatus (1) according to any one of the preceding claims, wherein the receiver-decoder apparatus further comprises a video output interface (12) for outputting a video signal and the receiver-decoder circuit (4, 9) and the EPG generation means (13, 19) are arranged to supply said signals to the display device.

9. A method of generating an electronic program guide in a receiver-decoder apparatus (1) having a receiver-decoder circuit (13, 19) capable of receiving and decoding broadcast television signals of different services to generate therefrom a video signal for display of an image on a display device (10), the method comprising
extracting signalling data broadcast with the broadcast television signal and received by the receiver-decoder circuit (13, 19) and generating therefrom a signal for display on said display device (10), of an electronic program guide showing a list of the services available for reception by the receiver-decoder circuit (4, 9) and events in respect of those services, and
identifying, within the services available for reception by the receiver-decoder circuit (4, 9) further events which are related to a plurality of respective events in the electronic program guide,
**characterised in that** the signal for display of the electronic program guide is generated showing the further events together with the list of services available for reception by the receiver-decoder circuit (4, 9) and the events in respect of those services, said further events being shown associated with said plurality of respective events to which they are related.

10. A method according to claim 9, wherein in the electronic program guide the events in respect of each service are shown by blocks (22), and the further events are shown by blocks (23) positioned adjacent the blocks (22) of the events to which they are related but arranged to create the appearance of the blocks (23) of the further events being more distant than the blocks (22) of the events to which they are related.

11. A method according to claim 10, wherein the blocks (23) of the further events are scaled relative to the blocks (22) of the events to which they are related to create the appearance of a perspective view.

12. A method according to claim 10 or 11, wherein the blocks (23) of the further events are overlapped by the blocks (22) of the events to which they are related.

13. A method according to any one claims 9 to 12, further comprising receiving user-inputs based on the electronic program guide and controlling the receiver-decoder apparatus (1) in response to those user inputs to select any of the events or further events for reception and/or for being recorded.

14. A method according to any one claims 9 to 13, further comprising storing the signal for display of an electronic program guide in a memory (14, 15) of the receiver-decoder apparatus (1).

15. A method according to any one claims 9 to 14, wherein the receiver-decoder apparatus further comprises a display device (10) and the method further comprises supplying said signals to the display device (10).

16. A method according to any one claims 9 to 15, wherein the receiver-decoder apparatus further comprises a video output interface for outputting a video signal and the method further comprises supplying said signals to the display device.

17. A computer program capable of execution by a receiver-decoder apparatus (1) and arranged on execution to cause the receiver-decoder apparatus to perform a method according to any one of claims 9 to 16.

18. A storage medium storing a computer program according to claim 17.

19. A broadcast signal representing a computer program according to claim 17.

## Patentansprüche

1. Empfänger-Decoder-Gerät (1), welches umfasst:
eine Empfänger-Decoder-Schaltung (4, 9), die in der Lage ist, Rundfunk-Fernsehsignale unterschiedlicher Dienste zu empfangen und zu decodieren, um davon ein Videosignal zur Anzeige eines Bilds auf einer Anzeigeeinrichtung (10) zu erzeugen; und
eine EPG-Erzeugungseinrichtung (13, 19) zum Extrahieren von Signaldaten, welche mit dem Rundfunk-Femsehsignal gesendet werden und welche durch die Empfänger-Decoder-Schaltung (4, 9) empfangen werden, um daraus ein Signal - zur Anzeige auf der Anzeigeeinrichtung (10) - einer elektronischen Programmführung, welche eine Liste der Dienste zeigt, welche für einen Empfang durch die Empfänger-Decoder-Schaltung (4, 9) verfügbar sind, und Ereignisse in Bezug auf diese Dienste zu erzeugen,
wobei die EPG-Erzeugungseinrichtung (13, 19) eingerichtet ist, innerhalb der Dienste, welche für einen Empfang durch die Empfänger-Decoder-Schaltung (4, 9) verfügbar sind, weitere Ereignisse zu identifizieren, welche auf mehrere entsprechende Ereignisse in der elektronischen Programmführung bezogen sind, und
**dadurch gekennzeichnet ist, dass** die EPG-Erzeugungseinrichtung (13, 19) eingerichtet ist, das Signal zur Anzeige der elektronischen Programm führung zu erzeugen, welches die weiteren Ereignisse zusammen mit der Liste an Diensten, welche zum Empfang durch die Empfänger-Decoder-Schaltung (4, 9) verfügbar sind, und die Ereignisse in Bezug auf diese Ereignisse zeigt, wobei die weiteren Ereignisse mit den mehreren entsprechenden Ereignissen, auf welche sie bezogen sind, verknüpft sind.

2. Empfänger-Decoder-Gerät (1) nach Anspruch 1, wobei in der elektronischen Programmführung die Ereignisse in Bezug auf jeden Dienst durch Blöcke (22) gezeigt sind, und die weiteren Ereignisse durch Blöcke (23) gezeigt sind, welche benachbart zu den Blöcken (22) der Ereignisse positioniert sind, auf welche sie bezogen sind, jedoch angeordnet sind, die Erscheinungsform der Blöcke (23) der weiteren Ereignisse, welche zeitlich mehr entfernt sind als die Blöcke (22) der Ereignisse, auf welche sie bezogen sind, zu bilden.

3. Empfänger-Decoder-Gerät (1) nach Anspruch 2, wobei die Blöcke (23) der weiteren Ereignisse in Bezug auf die Blöcke (22) der Ereignisse, auf welche sie bezogen sind, eingestuft sind, um die Erscheinungsform einer perspektivischen Ansicht zu bilden.

4. Empfänger-Decoder-Gerät (1) nach Anspruch 1, 2 oder 3, wobei die Blöcke (22) der weiteren Ereignisse durch die Blöcke der Ereignisse, auf welche sie bezogen sind, überlappend sind.

5. Empfänger-Decoder-Gerät (1) nach einen der vorhergehenden Ansprüche, welches außerdem eine Steuereinrichtung (16) zum Empfangen von Benutzer-Eingaben auf Basis der elektronischen Programmführung und zum Steuern des Empfänger-Decoder-Geräts (1) als Antwort auf diese Benutzer-Eingaben umfasst, um eines der Ereignisse oder weiterer Ereignisse zum Empfang auszuwählen und/oder zur Aufzeichnung.

6. Empfänger-Decoder-Gerät (1) nach einen der vorhergehenden Ansprüche, wobei die EPG-Erzeugungseinrichtung (13, 19) eingerichtet ist, das Signal zur Anzeige einer elektronischen Programmführung in einem Speicher (14, 15) des Empfänger-Decoder-Geräts (1) zu speichern.

7. Empfänger-Decoder-Gerät (1) nach einen der vorhergehenden Ansprüche, wobei das Empfänger-Decoder-Gerät (1) außerdem eine Anzeigeeinrichtung (10) umfasst, und die Empfänger-Decoder-Schaltung und die EPG-Erzeugungseinrichtung eingerichtet sind, die Signale zur Anzeigeeinrichtung (10) zu liefern.

8. Empfänger-Decoder-Gerät (1) nach einen der vorhergehenden Ansprüche, wobei das Empfänger-Decoder-Gerät außerdem eine Videoausgangs-Schnittstelle (12) aufweist, um ein Videosignal auszugeben, und die Empfänger-Decoder-Schaltung (4, 9) und die EPG-Erzeugungseinrichtung (13, 19) eingerichtet sind, die Signale zur Anzeigeeinrichtung zu liefern.

9. Verfahren zum Erzeugen einer elektronischen Programmführung in einem Empfänger-Decoder-Gerät (1), welches eine Empfänger-Decoder-Schaltung (13, 19) hat, welche in der Lage ist, Rundfunk-Fernsehsignale unterschiedlicher Dienste zu empfangen und zu decodieren und davon ein Videosignal zur Anzeige eines Bilds auf einer Anzeigeeinrichtung (10) zu erzeugen, wobei das Verfahren umfasst:
Extrahieren von Signaldaten, welche mit dem Rundfunk-Fernsehsignal empfangen werden und durch die Empfänger-Decoder-Schaltung (13, 19) empfangen werden, und Erzeugen davon eines Signals zur Anzeige auf der Anzeigeeinrichtung (10) einer elektronischen Programmführung, welche eine Liste der Dienste zeigt, welche zum Empfang durch die Empfänger-Decoder-Schaltung (4, 9) verfügbar sind, und Ereignissen in Bezug auf diese Dienste, und
Identifizieren - innerhalb der Dienste, welche zum Empfang durch die Emptänger-Decoder-Schaltung (4, 9) verfügbar sind - weiterer Ereignisse, welche auf mehrere entsprechende Ereignisse in der elektronischen Programmführung bezogen sind,
**dadurch gekennzeichnet, dass** das Signal zur Anzeige der elektronischen Programmführung erzeugt wird, indem die weiteren Ereignisse zusammen mit der Liste an Diensten gezeigt wird, welche zum Empfang durch die Empfänger-Decoder-Schaltung (4, 9) verfügbar sind, und Ereignisse in Bezug auf diese Dienste, wobei weitere Ereignisse in Verbindung mit auf den weiteren Ereignisse in Verbindung mit den mehreren entsprechenden Ereignissen, auf welche sie bezogen sind, gezeigt werden.

10. Verfahren nach Anspruch 9, wobei in der elektronischen Programmführung die Ereignisse in Bezug auf jeden Dienst durch Blöcke (22) gezeigt sind, und die weiteren Ereignisse durch Blöcke (23) gezeigt sind, welche benachbart zu den Blöcken (22) der Ereignisse positioniert sind, auf welche sie bezogen sind, jedoch eingerichtet sind, die Erscheinungsform der Blöcke (23) der weiteren Ereignisse, welche zeitlich mehr entfernt sind als die Blöcke (22) der Ereignisse, auf welche sie bezogen sind, zu bilden.

11. Verfahren nach Anspruch 10, wobei die Blöcke (23) der weiteren Ereignisse in Bezug auf die Blöcke (22) der Ereignisse, auf welche sie bezogen sind, eingestuft sind, um die Erscheinungsform einer perspektivischen Ansicht zu bilden.

12. Verfahren nach Anspruch 10 oder 11, wobei die Blöcke (23) der weiteren Ereignisse durch die Blöcke (22) der Ereignisse, auf welche sie bezogen sind, überlappend sind.

13. Verfahren nach einem der Ansprüche 9 bis 12, welches außerdem das Empfangen von Benutzer-Eingaben auf Basis der elektronischen Programmfizhrung und Steuern des Empfänger-Decoder-Geräts (1) als Antwort auf diese Benutzer-Eingaben umfasst, um eines der Ereignisse oder weitere Ereignisse zum Empfang und/oder zum Aufzeichnen auszuwählen.

14. Verfahren nach einem der Ansprüche 9 bis 13, welches außerdem das Speichern des Signals zur Anzeige einer elektronischen Programmführung in einem Speicher (14, 15) des Empfänger-Decoder-Geräts (1) umfasst.

15. Verfahren nach einem der Ansprüche 9 bis 14, wobei das Empfänger-Decoder-Gerät außerdem eine Anzeigeeinrichtung (10) umfasst, und das Verfahren außerdem das Liefern der Signale zur Anzeigeeinrichtung (10) umfasst.

16. Verfahren nach einem der Ansprüche 9 bis 15, wobei das Empfänger-Decoder-Gerät außerdem eine Videoausgabe-Schnittstelle umfasst, um ein Videosignal auszugeben, und das Verfahren außerdem das Liefern der Signale zur Anzeigeeinrichtung umfasst.

17. Computerprogramm, welches in der Lage ist, durch ein Empfänger-Decoder-Gerät (1) ausgeführt zu werden und zur Ausführung eingerichtet ist, um zu veranlassen, dass das Empfänger-Decoder-Gerät ein Verfahren nach einem der Ansprüche 9 bis 16 durchführt.

18. Speichermedium, welches ein Computerprogramm nach Anspruch 17 speichert.

19. Rundfunksignal, welches ein Computerprogramm nach Anspruch 17 zeigt.

## Revendications

1. Appareil de réception-décodage (1), comprenant :
un circuit de réception-décodage (49) capable de recevoir et de décoder des signaux de télévision diffusés de différents services pour générer à partir de ceux-ci un signal vidéo pour l'affichage d'une image sur un dispositif d'affichage (10) ; et
des moyens de génération d'EPG (13, 19) pour extraire des données de signalisation diffusées avec le signal de télévision diffusé et reçues par le circuit de réception-décodage (4, 9) pour générer à partir de celles-ci un signal pour l'affichage, sur ledit dispositif d'affichage (10), d'un guide de programmes électronique présentant une liste des services disponibles pour réception par le circuit de réception-décodage (49) et des événements en rapport avec ces services,
dans lequel les moyens de génération d'EPG (13, 19) sont agencés pour identifier, dans les services disponibles pour réception par le circuit de réception-décodage (4, 9), d'autres événements qui sont liés à une pluralité d'événements respectifs dans le guide de programmes électronique, et
**caractérisé en ce que** les moyens de génération d'EPG (13, 19) sont agencés pour générer le signal pour l'affichage du guide de programmes électronique présentant les autres événements avec la liste des services disponibles pour réception par le circuit de réception-décodage (4, 9) et les événements en rapport avec ces services, lesdits autres événements étant présentés associés à ladite pluralité d'événements respectifs auxquels ils sont liés.

2. Appareil de réception-décodage (1) selon la revendication 1, dans lequel, dans le guide de programmes électronique, les événements en rapport avec chaque service sont présentés par blocs (22), et les autres événements sont présentés par blocs (23) positionnés adjacents aux blocs (22) des événements auxquels ils sont liés, mais agencés pour créer l'apparence que les blocs (23) des autres événements sont plus distants que les blocs (22) des événements auxquels ils sont liés.

3. Appareil de réception-décodage (1) selon la revendication 2, dans lequel les blocs (23) des autres événements sont proportionnés par rapport aux blocs (22) des événements auxquels ils sont liés pour créer l'apparence d'une vue en perspective.

4. Appareil de réception-décodage (1) selon la revendication 2 ou 3, dans lequel les blocs (22) des autres événements sont recouverts par les blocs des événements auxquels ils sont liés.

5. Appareil de réception-décodage (1) selon l'une quelconque des revendications précédentes, comprenant en outre des moyens de commande (16) pour recevoir des entrées d'utilisateur basées sur le guide de programmes électronique et pour commander l'appareil de réception-décodage (1) en réponse à ces entrées d'utilisateur pour sélectionner l'un quelconque des événements ou des autres événements pour réception et/ou pour enregistrement.

6. Appareil de réception-décodage (1) selon l'une quelconque des revendications précédentes, dans lequel les moyens de génération d'EPG (13, 19) sont agencés pour mémoriser le signal pour l'affichage d'un guide de programmes électronique dans une mémoire (14, 15) de l'appareil de réception-décodage (1).

7. Appareil de réception-décodage (1) selon l'une quelconque des revendications précédentes, dans lequel l'appareil de réception-décodage (1) comprend en outre un dispositif d'affichage (10), et le circuit de réception-décodage et les moyens de génération d'EPG sont agencés pour fournir lesdits signaux au dispositif d'affichage (10).

8. Appareil de réception-décodage (1) selon l'une quelconque des revendications précédentes, dans lequel l'appareil de réception-décodage comprend en outre une interface de sortie vidéo (12) pour délivrer un signal vidéo, et le circuit de réception-décodage (4, 9) et les moyens de génération d'EPG (13, 19) sont agencés pour fournir lesdits signaux au dispositif d'affichage.

9. Procédé de génération d'un guide de programmes électronique dans un appareil de réception-décodage (1) comportant un circuit de réception-décodage (13, 19) capable de recevoir et de décoder des signaux de télévision diffusés de différents services pour générer à partir de ceux-ci un signal vidéo pour l'affichage d'une image sur un dispositif d'affichage (10), le procédé consistant à :
extraire des données de signalisation diffusées avec le signal de télévision diffusé et reçues par le circuit de réception-décodage (13, 19) et générer à partir de celles-ci un signal pour l'affichage, sur ledit dispositif d'affichage (10), d'un guide de programmes électronique présentant une liste des services disponibles pour réception par le circuit de réception-décodage (4, 9) et des événements en rapport avec ces services, et
identifier, dans les services disponibles pour réception par le circuit de réception-décodage (4, 9), d'autres événements qui sont liés à une pluralité d'événements respectifs dans le guide de programmes électronique,
**caractérisé en ce que** le signal pour l'affichage du guide de programmes électronique est généré présentant les autres événements avec la liste des services disponibles pour réception par le circuit de réception-décodage (4, 9) et les événements en rapport avec ces services, lesdits autres événements étant présentés associés à ladite pluralité d'événements respectifs auxquels ils sont liés.

10. Procédé selon la revendication 9, dans lequel, dans le guide de programmes électronique, les événements en rapport avec chaque service sont présentés par blocs (22), et les autres événements sont présentés par blocs (23) positionnés adjacents aux blocs (22) des événements auxquels ils sont liés, mais agencés pour créer l'apparence que les blocs (23) des autres événements sont plus distants que les blocs (22) des événements auxquels ils sont liés.

11. Procédé selon la revendication 10, dans lequel les blocs (23) des autres événements sont proportionnés par rapport aux blocs (22) des événements auxquels ils sont liés pour créer l'apparence d'une vue en perspective.

12. Procédé selon la revendication 10 ou 11, dans lequel les blocs (23) des autres événements sont recouverts par les blocs (22) des événements auxquels ils sont liés.

13. Procédé selon l'une quelconque des revendications 9 à 12, comprenant en outre la réception d'entrées d'utilisateur basées sur le guide de programmes électronique et la commande de l'appareil de réception-décodage (1) en réponse à ces entrées d'utilisateur pour sélectionner l'un quelconque des événements ou des autres événements pour réception et/ou pour enregistrement.

14. Procédé selon l'une quelconque des revendications 9 à 13, comprenant en outre la mémorisation du signal pour l'affichage d'un guide de programmes électronique dans une mémoire (14, 15) de l'appareil de réception-décodage (1).

15. Procédé selon l'une quelconque des revendications 9 à 14, dans lequel l'appareil de réception-décodage comprend en outre un dispositif d'affichage (10), et le procédé comprend en outre la fourniture desdits signaux au dispositif d'affichage (10).

16. Procédé selon l'une quelconque des revendications 9 à 15, dans lequel l'appareil de réception-décodage comprend en outre une interface de sortie vidéo pour délivrer un signal vidéo, et le procédé comprend en outre la fourniture desdits signaux au dispositif d'affichage.

17. Programme d'ordinateur qui peut être exécuté par un appareil de réception-décodage (1) et agencé pour, lors de son exécution, amener l'appareil de réception-décodage à exécuter un procédé selon l'une quelconque des revendications 9 à 16.

18. Support de mémorisation mémorisant un programme d'ordinateur selon la revendication 17.

19. Signal diffusé représentant un programme d'ordinateur selon la revendication 17.
